# EUROPEAN PATENT SPECIFICATION

(11) **EP 2 278 310 B1**
(45) Date of publication and mention of the grant of the patent: **16.11.2016**
(21) Application number: 10012517.8
(22) Date of filing: 18.06.2004
(51) Int. Cl.: G01N 27/22

(54) **Capacitive sensor**
Kapazitiver Sensor
Capteur capacitif

(43) Date of publication of application: 26.01.2011
(62) Divisional of application: 04405379.1
(73) Proprietor: Sensirion Holding AG, 8712 Stäfa (CH)
(72) Inventor: Kummer, Adrian, 8001 Zürich (CH); Hierlemann, Andreas, 8049 Zürich (CH)
(74) Representative: Toleti, Martin

(56) References cited:
- EP-A- 0 911 628
- GB-A- 2 256 489
- US-A- 4 854 725
- US-B1- 6 249 130
- US-B1- 6 380 747
- SHEIRETOV Y ET AL: "DIELECTROMETRY MEASUREMENTS OF SPATIAL MOISTURE PROFILES IN OIL-IMPREGNATED PRESSBOARD", PROCEEDINGS OF THE INTERNATIONAL CONFERENCE ON PROPERTIES AND APPLICATIONS OF DIELECTRIC MATERIALS, XX, XX, 3 July 1994 (1994-07-03), pages 701-704, XP000749804,
- KUMMER A M ET AL: "TUNING SENSITIVITY AND SELECTIVE OF COMPLEMENTARY METAL OXIDE SEMICONDUCTOR-BASED CAPACITIVE CHEMICAL MICROSENSORS", ANALYTICAL CHEMISTRY, AMERICAN CHEMICAL SOCIETY. COLUMBUS, US, vol. 76, no. 9, 1 May 2004 (2004-05-01), pages 2470-2477, XP001196745, ISSN: 0003-2700

## Description

### Field of the Invention

This invention concerns a novel design for capacitive sensors based on configurable electrodes. It allows to significantly reduce costs and, at the same time, efficiently improves signal quality by drastically reducing detrimental influences, such as sensor drift and the influence of interference, such as humidity or temperature. The novel design results in much more stable sensor signals. Also, the cost of a sensor system is drastically reduced. First, the number of sensors required for acquiring a specific amount of information is reduced. Separate reference capacitors or other reference circuits are no more needed. Secondly, if one or several of the novel sensors are integrated on a microchip, the chip size can be drastically reduced, as less sensors and associated circuitry are required on the chip for obtaining the same or better results.

### Background and Prior Art

A chemical sensor is a device that transforms chemical information, such as a concentration of a specific substance (analyte), into an analytically useful signal, often an electric signal. The analyte is usually measured using a sensitive material which changes its physical properties upon interaction with said analyte. A transducer is used to measure the changes in the physical properties of the sensitive material, which properties are correlated to the analyte concentration.

Today, chemical sensors are often miniaturized and integrated to achieve low cost production. Commercial CMOS (Complementary Metal Oxide Semiconductor) technology offers reliable batch fabrication at ever-decreasing feature sizes and enables low cost production of transducers including integrated circuitry. Integration of the read-out and driving circuitry on the sensor chip not only reduces the number of external devices that are needed to operate the sensor, but also allows processing the sensor signals at the source, thus decreasing degradation of the signal quality. Microsensors relying on different transducing principles along with associated circuitry have been implemented in CMOS technology, as described e.g. by Y. Y. Qiu, C. Azeredo-Leme, L. R. Alcacer, and J. E. Franca in "A CMOS humidity sensor with onchip calibration" Sensors and Actuators A-Physical, 92 (2001) 80-87.

Capacitive CMOS microsensors with sensitive material coatings are promising devices for chemical sensing as no micromachined parts such as membranes are needed, which renders the chip more rugged and reduces the number of post processing steps and, hence, costs.

It is often necessary or of interest to measure or control the temperature of the sensor. Therefore, capacitive sensors have also been integrated on micromachined membranes with heaters and temperature sensors, as described by A. Koll in "CMOS Capacitive Chemical Microsystem for Volatile Organic Compounds", Ph.D. thesis No 13460, ETH Zurich, Zurich (1999). Also, temperature-controlled sensors in CMOS technology have been implemented with the respective control circuitry for a broad temperature range, e.g., for metal-oxide-semiconductor sensors.

The present invention relates to capacitive sensors. They are characterized by the fact that the transducer is a capacitor, covered with a sensitive layer. The capacitance is affected by changes in the dielectric properties and, possibly, in the volume of the material on top of the electrodes, e.g. a sensing layer upon exposure to an analyte.

Sensitive layers often consist of polymers, as described by H. E. Endres and S. Drost in "Optimization of the Geometry of Gas-sensitive Interdigital Capacitors", Sensors and Actuators B-Chemical, 4 (1991) 95-98. But metal oxides, molecular sieves, or liquid crystals may also be used. Alternatively, instead of using any sensitive material, the respective physical change in the sample phase may be monitored.

Capacitances are usually measured at an AC frequency of a few kHz up to a few MHz. An advantage of capacitive sensors is the low power consumption during operation, enabling their usage in hand-held devices.

Initial applications areas of chemocapacitors include humidity sensing using polyimide films, since water has a high dielectric constant of 76.6 (in liquid state, at 303 K) leading to large capacitance changes. Capacitive humidity sensors are commercially available from Sensirion, Vaisala, Humirel, and others. Also, Geist US patent 5 767 687 and US patent publication 2003 094045 refer to humidity sensors, for example.

More recent applications include the detection of organic volatiles in the gas or liquid phase.

Combinations of capacitive sensors with other sensing principles are also possible and implemented. A monolithic CMOS chip comprising a capacitive, a mass-sensitive cantilever, and a calorimetric sensor combined with electronic circuitry is reported by C. Hagleitner, A. Hierlemann, D. Lange, A. Kummer, N. Kerness, et al. in "Smart single-chip gas sensor microsystem", Nature, 414 (2001), 293-296.

The capacitors of such capacitive sensors are predominantly designed as interdigitated structures. Such interdigitated structures are favored because the electrode configuration is planar, and the sample or analyte has free access to the sensitive region of the sensor device. It also results in a short response time of the device.

Patents for specific applications of such sensors include end-of-life-time detectors of gas filters, see US patent 5 512 882 and US patent 4 926 156 for specific sensitive layers, or Geist US patent 5767687, mentioned above, for humidity sensors. Other patents refer to the usage in the liquid phase, e.g. analytes, such as hydrocarbons, are detected in a liquid medium via a capacitance decrease caused by displaced water molecules due to bubble formation at the surface of the sensitive layer as described in US patent 4 728 882. An ion exchange layer to detect analyte ions is disclosed in US patent 4 935 207, whereas US patent 4 822 566 describes a biosensor which relies on a biospecific binding between a biochemical binding system and an analyte in an aqueous fluid.

Since the changes in the sensor capacitance upon analyte absorption are small in comparison to the absolute capacitance of the sensor, a differential measurement, between a sensor capacitor with a sensitive layer and a reference capacitor without such a layer, is preferable.

For capacitive sensors, mainly the changes in two physical properties are relevant for the resulting change in capacitance; these two properties being the dielectric constant and the probed volume. The presence of two relevant physical effects allows the use of an additional mechanism for sensor selectivity. A thin probed sample volume or sensitive layer invokes a different sensitivity pattern than a thick probed sample volume or sensitive layer. The reason is that the effect of the layer's thickness is correlated to the distribution of the electric field originating from the electrodes of an interdigitated capacitor. This can be understood with the following exemplary consideration, referring to an interdigitated capacitor used as chemical sensor in the gas phase.

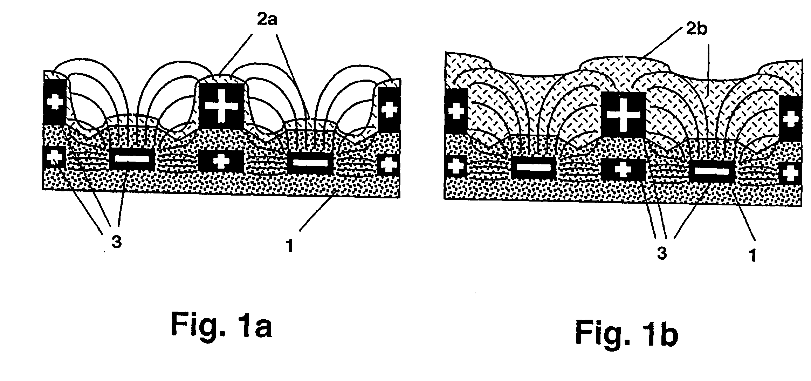

For a simple interdigitated structure, the space above the sensor device within a distance of approximately half of the electrode periodicity contains about 95% of the electric field lines. A "thin" layer or "thick" layer, i.e. probed sample volume or sensitive layer, is defined with respect to the extension of the electric field and, therefore, with respect to the electrode periodicity, as shown in Figs. 1a and 1b. For a layer thickness significantly less than half the periodicity as shown in Fig. 1a, the region of the strong electric field extends above the sensitive layer. Upon analyte interaction, the amount of polarizable material in the sensed region of the capacitor always increases, which results in a capacitance increase regardless of the dielectric constant of the analyte.

For a layer thickness greater than half the periodicity of the electrodes as depicted in Fig. 1b, almost all electric field lines are within the sensitive volume. Consequently, the capacitance is determined by the composite dielectric constant of the mixture between sensitive material and analyte. The capacitance change can therefore be positive or negative, depending on whether the composite dielectric constant increases or decreases, which is generally determined by whether the analyte or the material has the higher dielectric constant.

In summary, using the same type of sensor capacitor and the same sensitive material, two different independent measurements can be performed. However, this cannot be done with the same sensor at the moment. Two different sensors are required, coated with sensitive layers of different thicknesses.

Such an arrangement has already been successfully used in the case of capacitive gas sensors. With a differential measurement between a sensor with a thick sensitive layer and a sensor with a thinner sensitive layer, the cross-sensitivity to humidity and the sensor drift have been reduced by an order of magnitude, as shown by A. Kummer, A. Hierlemann, and H. Baltes in "Tuning Sensitivity and Selectivity of Complementary Metal Oxide Semiconductor-based Capacitive Chemical Microsensors", Analytical Chemistry, vol. 76, (2004), 2470-2477. This paper discloses a device in which one sensor is connected as sensor capacitor and another as pseudo-reference capacitor to the delta-sigma modulator of a read-out circuit.

According to "Dielectrometry measurements of spatial moisture profiles in oil-impregnated pressboard" by Y. Sheiretov et al, in Proceedings of the International Conference on Properties and Applications of Dielectric Materials, 3 July 1994, pages 701 - 704, the dielectric spectrum of pressboard, i.e. its complex permittivity as a function of frequency , is related to its moisture content and to its temperature. Consequently, it is possible to use dielectrometry measurements to measure a pressboard sample's moisture content. A method of calculating the complex permittivity of pressboard involves interdigitated electrodes, applied only to one surface of the sample. Since the electric field's depth of penetration is dependent on the spatial wavelength of the electrodes, different sensors yield information from different depths in the material, making it possible to measure spatial distributions of the dielectric properties. This can allow the study of the diffusion of water in pressboard.

In US 6,380,747 a method is disclosed for processing, optimization, calibration, and display of measured dielectrometry signals. A property estimator is coupled by way of instrumentation to an electrode structure and translates sensed electromagnetic responses into estimates of one or more preselected properties or dimensions of the material, such as dielectric permittivity and ohmic conductivity, layer thickness, or other physical properties that affect dielectric properties, or presence of other lossy dielectric or metallic objects. A dielectrometry sensor is disclosed which can be connected in various ways to have different effective penetration depths of electric fields but with all configurations having the same air-gap, fluid gap, or shim lift-off height, thereby greatly improving the performance of the property estimators by decreasing the number of unknowns. The sensor geometry consist of a periodic structure with, at any one time, a single sensing element that provides for multiple wavelength within the same sensor footprint.

In EP 0 911 528 A, two facing capacitor electrodes have connecting wires. The capacitor electrodes are at least ten times longer than the greatest cross-sectional dimension. The capacitor electrodes are arranged on a single plane. The capacitor electrodes are wires and tensioned within a frame to from a grid in which the wires to the respective grids alternate. The gap between the capacitor electrodes is at least equal to the cross-sectional distance in the direction of the gap between electrodes, between 0.1 and 5 mm, and preferably 2.5 mm. The frame opening is between 1 cm<2> and 25 cm<2>. There are between 20 and 25 pairs of wires. The thickness of the measuring volume is determined by the gap between electrodes.

In US 4,854,725, a system monitors the quality of steam flowing in a pipeline includes a test cell which is connected inline into the pipeline and has the steam flowing through it. A plurality of electrodes are located within the test cell and cooperate with the test cell to provide capacitance signals corresponding to capacitances of the steam passing between the electrodes and the test cell. The electrodes have different spacings between them and an interior wall of the test cell. A sensor senses the temperature of the steam flowing through the test cell and provides a temperature signal corresponding to the sensed temperature. Another sensor senses the pressure of the steam and provides a pressure signal corresponding to the sensed pressure. Circuitry connected to the test cell, to all the electrodes, to the temperature sensor and to the pressure sensor measures the quality of the steam in accordance with the temperature signal, the pressure signal and one of the capacitance signals.

In US 6 249 130, a shielded flat-plate proximity/dielectric properties sensor includes a dielectric substrate leaving a planar configuration and a pair of spaced sensing electrodes mounted on one surface of the substrate. A pair of shield electrodes limit the electric field produced by the sensing electrodes. A first shield electrode on the back of the substrate intercepts field lines behind the sensor to prevent detection of objects from behind the sensor. A second shield electrode coplanar with and between the sensing electrodes intercepts field lines very close to the sensor to prevent the dense electric field near the sensor from dominating measurements of objects within the field.

In GB 2 256 489 A, an electric measuring apparatus, e.g. for measuring the water content of a heterogeneous mixture of soil and air, includes an oscillator and a sensor capacitor in the tuning circuit of the oscillator, the sensor capacitor has spaced electrodes that extend from the apparatus in such a way that they are able to be placed in direct contact with the medium and produce an electric field that traverses the medium between the electrodes. The oscillator output is transmitted optically, either by optical cable or in free space to a receiver with display. The electrodes are preferably in the form of rods and may be detachable so that they can remain in the medium under test. The oscillator frequency may be 100-160MHz and this frequency is reduced by division before optical transmission. Use of optical transmission minimises interference from capacitative effects associated with an operator.

### Summary of the Invention

The invention is based on the novel idea that,
(1) by providing a variable electrode configuration, i.e. different electrical connections of different electrode subunits or groups, and
(2) by varying the connections to the read-out circuitry, the electric field, i.e. the distribution of the field lines, may be modified, resulting in a variation of the sensor capacitor and thus the sensor itself.

Thus, the same sensor, in different configurations, may be used for different purposes, e.g. providing the performance of two or more independent measurements with the same single sensor. Naturally, this reduces the number of sensors required for a particular detection task.

The signal quality of such a sensor may be improved by performing a differential measurement in which two electrode configurations can be read out simultaneously. By modifying the effective sensitive volume of the individual configurations, the differential measurement can be tuned so that sensor drift or other unwanted effects influencing the sensor response are strongly reduced. A differential measurement relying on two sensor signals of the same sensor but at different electrode configurations effectively reduces sensor drift and, especially in the case of gas sensors, humidity influence. As will be understood by a person skilled in the art, the reduction of drift and other undesired influences is very effective since the reference capacitor used for the differential measurement is exactly the same device - the same capacitor and the same sensitive layer - as the sensor capacitor, only the electrode configurations differ.

In other words, the novel principle works very efficiently because the identical sensor is used both as "sensor" and as "reference", which assures a perfect matching, i.e. any variations in the sensor structure or its sensitive coating or ambient conditions are cancelled out.

The invention also includes a new method which allows performing two independent measurements with the same sensor device. Obviously, this reduces the number of sensors required to obtain a certain amount of information by a factor of two.

The basic principle of the invention shall be explained for a simple interdigitated capacitor, covered with a layer of a sensitive material. The thickness of the sensitive layer is measured relative to the extension of the electric field lines of the capacitor. For an interdigitated structure, the space above the device containing 95% of the field lines is within a distance of approximately half of the electrode periodicity, as described by P. Van Gerwen, W. Laureys, G. Huyberechts, M. Op De Breeck, K. Baert, J. Suls, A. Varlan, W. Sansen, L. Hermans, R. Mertens in "Nanoscaled interdigitated electrode arrays for biochemical sensors", Proc. of Transducers '97, 2, 907-910.

If the electrode arrangement is irregular, there is no periodicity in the structure. However, this will not cause the argumentation following further down to fail. The electrode spacing can be used equivalently to the electrode periodicity as measure for the extension of the electric field lines.

According to a first aspect of the present invention there is provided a capacitive sensor with a plurality of electrodes, according to claim 1

The electrode arrangement is switchable to at least two different electrical configurations resulting in at least two different distributions of the generated electrical field, in particular a first configuration resulting in a small extension of the electric field or its field lines and a second configuration resulting in a large extension of the electrical field or its field lines, resp.

Preferably, each electrode group is connectable to associated circuitry for generating a desired electrical field.

Preferably, more than two electrode groups are provided, each connectable to associated circuitry.

Preferably, the electric fields provided by each of the electrode groups differ with regard to shape and/or intensity of the electrical field lines, in particular with regard to the depth or height of the electrical field lines.

Preferably, in at least one of the configurations one electrode group remains unconnected or floating.

Preferably, in at least one of the configurations one electrode group is grounded.

The electrodes of different electrode groups are interdigitated.

In another embodiment, there are one or more switches to alternate between different configurations which switches preferably are integrated onto the same chip.

Preferably, circuitry is provided, connected to the switches, which addresses and switches between different configurations.

Preferably, the electrodes or groups of electrodes are located on a heatable area, preferably on a micromachined membrane with an integrated heater.

Preferably, the sensor includes a temperature sensor for measuring the temperature of the electrode arrangement, said temperature sensor being preferably integrated into said capacitive sensor or provided close, especially underneath, to said capacitive sensor.

The sensor includes a cover layer of a sensitive material, especially a polymer layer.

According to another aspect of the present invention, the capacitive sensor may be used as capacitive-type chemical or humidity sensor. Preferably, the capacitive sensor may be used as capacity-type biosensor, preferably for an analyte in a liquid phase.

According to another aspect of the present invention there is provided an integrated sensor array comprising a plurality of the capacitive sensors according to one of the previous embodiments. Preferably, the sensor array comprises at least one multiplexer, preferably integrated into said sensor array.

According to another aspect of the present invention, there is provided a sensor system comprising a capacitive sensor according to one of the previous embodiments, signal conditioning means for driving at least one of the electrodes or groups of electrodes to generate the desired distribution of the electrical field, and read-out means for receiving and/or evaluating signals of said sensor.

Preferably, the capacitive sensor system comprises signal conditioning means for driving at least one of the electrodes or groups of electrodes of at least one sensor in said array to generate the desired different distributions of the electrical field, and read-out means for receiving and/or evaluating signals of at least one sensor in said array.

Preferably, the read-out means of the sensor system is or comprises a delta-sigma modulator. Preferably, the read-out means of the sensor system allows for a differential measurement between different electrode configurations. Preferably, the sensor system further comprising means for reading-out and/or controlling the membrane temperature.

According to another aspect of the present invention, the capacitive sensor according to any of the previous embodiments, or the sensor system according to any of the previous claims the sensor is adapted to an analyte in its gaseous phase and/or its liquid phase and/or its solid, potentially dispersed, phase.

### Brief Description of the Drawings

In the following, various examples and modifications for carrying out the invention shall be explained together with the drawings. These show in
Figs. 1 a and 1 b two sensors with sensitive layers of different thicknesses (prior art);
Figs. 2a to 2c the effect of a varied electrode periodicity;
Figs. 3a and 3b the effect of a varied electrode connection scheme;
Figs. 4a and 4b schematics of two electrode designs implementing the different electrode connection schemes shown in Figs. 3a and 3b;
Figs. 5a to 5c an electrical switching scheme for the electrodes shown in Figs. 4a and 4b;
Fig. 6 a output signal diagram of a poly(etherurethane)-(PEUT)-coated sensor according to Fig. 3a or 3b exposed to different concentrations of n-octane and different humidities;
Fig. 7 another electrode layout featuring high flexibility for a sensor according to the invention;
Figs. 8a and 8b (not claimed) a further example for implementing the invention;
Fig. 9 (not claimed) an irregular electrode layout embodying the invention;
Figs. 10a and 10b an example for varying the extension of the electric field lines by switching the electrical connection of the electrodes;
Figs. 11a and 11b an application example similar to the example shown in Figs. 10a and 10b;
Fig. 12 an application example similar to Figs. 11a and 11b with a multi-layer electrode structure.

### Detailed Description of the Drawings

The two Figs. 1a and 1b show the surfaces of two sensor substrates 1 each covered with a sensitive layer 2a and 2b, respectively. The desired selectivity of the sensor is achieved by varying the thickness of the sensitive layer. Fig. 1a shows a thin layer 2a, perhaps not even contiguous, whereby the electric field lines extend to a large part outside the sensitive layer 2a. Fig. 1b on the other hand shows a thick layer 2b whereby the field lines, as shown, extend essentially inside of this sensitive layer 2b. It should be understood that the terms "thick" or "thin" are here defined relative to the extension of the electric field lines. The "thin" sensor of Fig. 1 a obviously shows a different characteristic compared to the "thick" sensor of Fig. 1b, but the two sensors are so-to-speak interrelated and in some way limited by the physical thickness or volume of the respective sensitive layer 2a or 2b.

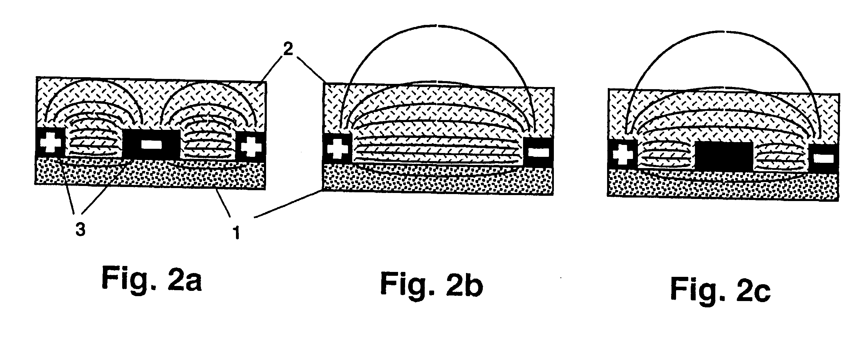

Now, overcoming this limitation, the electrode periodicity or spacing may be varied instead of modifying the thickness of the sensitive layer. Figs. 2a and 2b, respectively, show polymer (or other sensitive) layers 2 of the same absolute thickness on interdigitated capacitive sensor electrodes 3 having different effective spacings so that one of these layers is effectively thick (Fig. 2a) and the other effectively thin (Fig. 2b). Yet, for mechanically fixed electrodes, there are still two sensors with different electrode spacing required for the two measurements, clearly visible when comparing Fig. 2a with Fig. 2b.

The invention overcomes even this limitation by changing the electrode periodicity and/or spacing of a defined, fixed electrode pattern by varying the electrical connections of the different electrode sets. An example is given in Fig. 2c for an interdigitated capacitor, the electrode sets of which are the finger sets of the interdigitated arrangement. By changing the electrical connection of the structure shown in Fig. 2a, e.g. by switching the center electrode off, the effective electrode periodicity and/or spacing, i.e. the distances between those electrodes used to measure the capacitance, is varied. Consequently, the extension of the electric field (or flux) lines varies and, therefore, the effective thickness of the sensitive layer is modified as well. Thus, two measurements with a single (identical) sensor, but with two different electrode connections, may now provide the information of two sensors.

To further illustrate the above said, the invention shall be explained again in connection with Figs. 2a to 2c. The basic principle is to change the effective sensitive volume, here the effective sensitive layer thickness, by variation of the electrode periodicity. The actual physical thickness of the sensitive layer remains untouched, as is clearly indicated in the three figures.

Fig. 2a shows a scheme of the electrodes 3 with a small periodicity, i.e. the electrodes are relatively narrowly spaced. This results in an electric field distribution completely within the sensitive layer 2. This in turn is equivalent to a thick sensitive layer 2 for the given electrode spacing.

Fig. 2b in contrast shows an electrode scheme with a large periodicity, i.e. the electrodes are more widely spaced. This results in an electric field distribution also outside the sensitive layer 2. This in turn is equivalent to a thin sensitive layer 2 for the given electrode spacing. But the structure of Fig. 2b still differs physically from the structure of Fig. 2a: it has a different electrode pattern.

Fig. 2c then shows a possibility to achieve the effect of a thin, sensitive layer 2 with the structure according to Fig. 2a. This is obtained by varying the distribution of the electrical field which is effected by varying the electrical connection and/or polarity of the existing electrodes. It is obvious that by letting the center electrode float and connecting the outside electrodes as shown, a similar field distribution as shown in Fig. 2b can be achieved - but without any physical changes of the sensor.

In brief, the basic functional principle of the invention may be summarized as follows:
For a sensitive layer of defined thickness:
   (a) Small electrode periodicity leads to an effectively thick sensitive layer.
   (b) Large periodicity causes an effectively thin layer.
   (c) Alternative electrical connection of electrodes can be used to achieve a situation similar to that shown in (b) with an effectively large periodicity, resulting in an effectively thin layer.

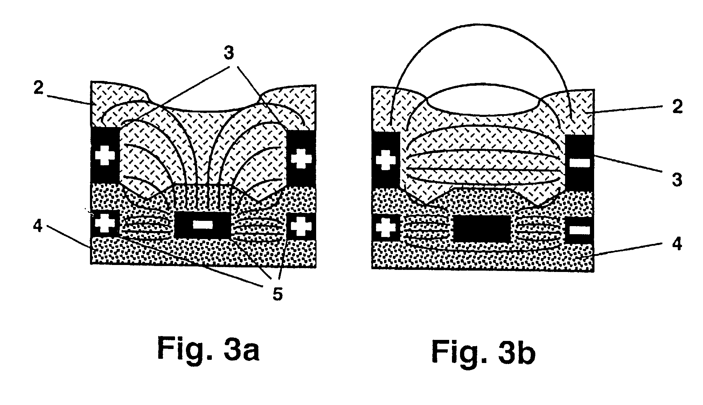

   Figs. 3a and 3b illustrate a sensor design with "stacked" electrodes, wherein a first group or layer of electrodes 3 is arranged at a first, upper plane in a sensitive layer 2 and a second group or layer of electrodes 5 is arranged at a second, lower plane an intermetal oxide 4. The cross section of one repeating unit of an electrode structure is displayed with two configurations, a "normal" configuration in Fig. 3a and "alternative" one in Fig. 3b, with the corresponding field lines shown. In the normal configuration of Fig. 3a, the central electrode of the lower group has a negative potential, whereas the electrodes of the upper group and those of the lower group underneath the upper group electrodes have a positive potential. The resulting field lines are illustrated in Fig. 3a. In the alternative configuration shown in Fig. 3b, the leftmost electrodes of both groups are kept at the same potential, whereas the rightmost electrodes are switched the negative potential. The center electrode of the lower group is floating and thus has a negligible effect on the electric field shown in Fig. 3b. Obviously, this electrode layout pattern may be repeated, resulting in an interdigitated stacked electrode arrangement of any length.

Again, the effective thickness of the sensitive layer is changed by varying the electrical connections of the stacked electrodes. Whereas Fig. 3a shows an electrode connection scheme resulting in a small electrical field extension, i.e. a relatively thick sensitive layer, shows Fig. 3b in contrast, somewhat similar to Fig. 2c, a large electrical field extension, resulting in a relatively thin sensitive layer.

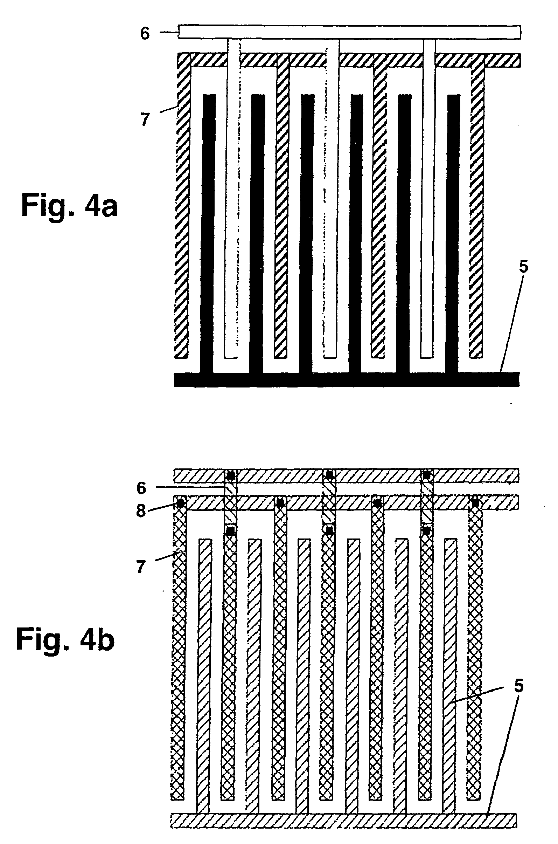

Figs. 4a and 4b show a top view of a potential interdigitated design according to Figs. 3a and 3b with stacked metal layers, comprising a first electrode group or pattern 5 and a second electrode group or pattern 7 of a metal A in one plane and a superimposed electrode group or pattern 6 of a metal B in a second plane above said first plane. The latter is shown in white in Fig. 4a. Electrically connected electrodes shown in the same hatching or color, i.e. all electrodes are separated from each other in Fig. 4a, which is the first configuration.

Fig. 4b depicts schematically the second configuration in which the two superimposed electrode patterns 6 and 7 are connected by vias 8, forming a first electrode, whereas electrode pattern 5 forms the second electrode of the sensor's capacitor. This is an example for a possible layout using a double-metal CMOS process.

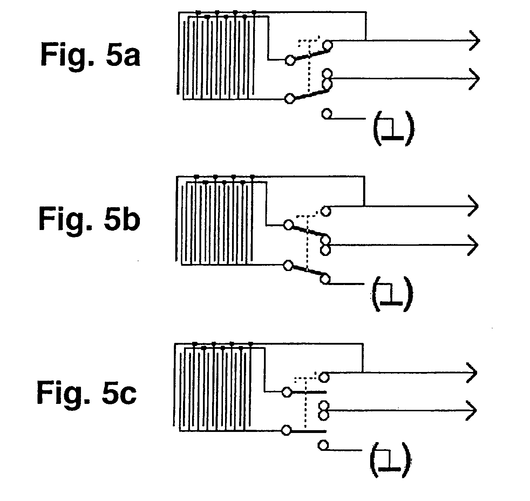

Figs. 5a to 5c illustrate an electrical switching scheme for electrodes, e.g. for an electrode arrangement as shown in Fig. 4b, with the switches in different positions. Three sets of interdigitated electrodes are provided. The switch position for a first, "normal", electrical connection scheme is shown in Fig. 5a. Here, the electrodes generate small-extension electrical field lines similar to the field shown in Fig. 3a, resulting in an effectively thick sensor layer. The alternative switch position shown in Fig. 5b results in a large-extension electrical field similar to the field shown in Fig. 3b, resulting in an effectively thick sensor layer. The third alternative is an "unconnected" position of the switches, whereby only one of the electrodes sets is connected.

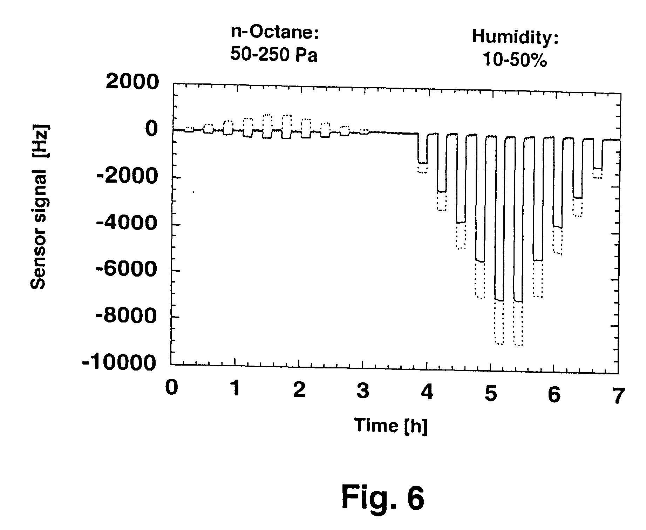

Fig. 6 illustrates the output signals of a poly-etherurethane-coated (PEUT-coated) sensor, essentially equivalent to the sensor shown in Figs. 3a/3b, exposed to different concentrations of n-octane (50 to 250 Pa) and different humidities (10 to 50% RH). The frequency shifts were measured for two different electrode configurations as a function of time. The solid lines represent the measurements using the normal configuration of Fig. 3a, whereas the dashed lines show the alternative configuration as depicted in Fig. 3b. Negative frequency shifts indicate a capacitance increase and positive shifts a decrease. In the normal configuration according to Fig. 3a, n-octane gives a capacitance increase and humidity a decrease, respectively, whereas in the alternative configuration according to Fig. 3b, both analytes give capacitance increases.

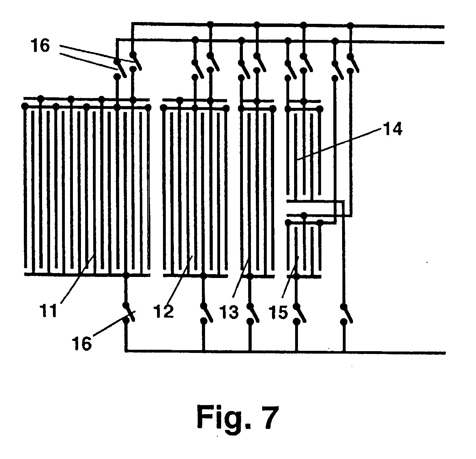

Fig. 7 shows another implementation of the invention. The effective sensor size may be varied by connecting or disconnecting sensor areas of different sizes. Each of the sensor areas 11 to 15 of decreasing size may be individually connected by switches 16 analogous to the design shown in Fig. 5. The scheme of the electrical connections and the layout of the electrodes should now be easily understood by someone skilled in art.

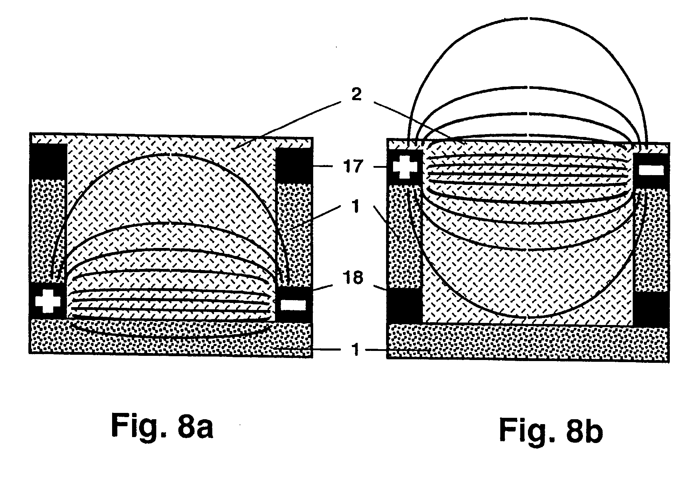

Figs. 8a and 8b (not claimed) illustrate another exemplary implementation of the invented principle of changing the effective thickness of a sensitive layer by switching the electrical connection of the electrodes. Here, the effective location of the electrodes is changed instead of the electrode periodicity or spacing as shown and described in connection with Figs. 2a and 2b or 3a and 3b. Fig. 8a depicts the configuration of the lower electrode group 18 being activated, whereby an effectively thick sensitive layer is generated since the majority of the field lines is located within the layer volume. In contrast, the electrical connection shown in Fig. 8b, with the upper electrode group 17 being activated, generates an effectively thin layer, i.e. the region with strong electric field lines extends above the sensitive layer.

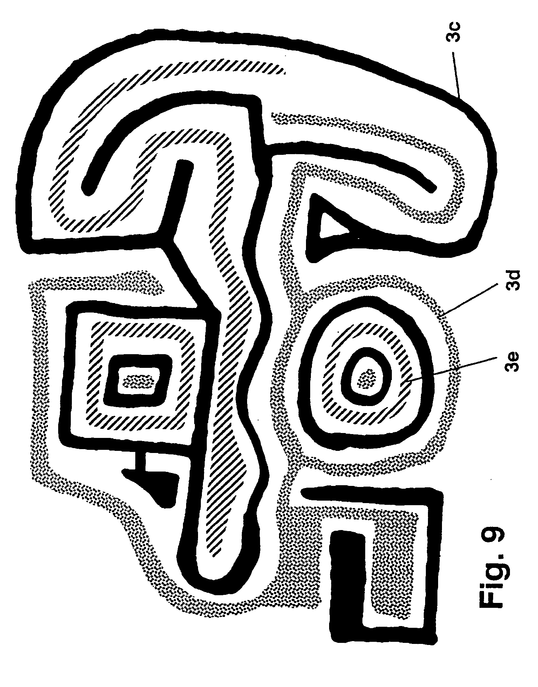

Fig. 9 (not claimed) shall indicate that the electrode arrangements do not have to be designed in a regular way such as the interdigitated structures described above. The inventive principle can as well be realized with arbitrary shapes, one of which is displayed in Fig. 9 as exemplary example. In a normal configuration, the black electrodes 3c can be measured versus the dotted electrodes 3d and the dashed electrodes 3e combined. In an alternative configuration, the dotted electrodes 3d might be measured against only the dashed electrodes 3.

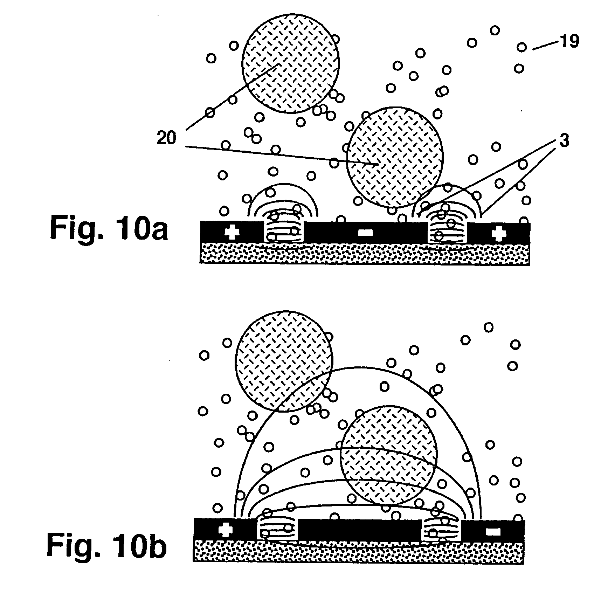

Figs. 10a and 10b illustrate a further example of applying the principle of changing the extension of the electric field lines by switching the electrical connection of the electrodes 3. Here, selectivity towards two analytes 19 and 20 of different sizes is achieved. Depending on the structural dimensions of the electrodes 3, analytes can be, e.g. chemical molecules, macromolecules, proteins, cells, or macroscopic particles. In the normal configuration shown in Fig. 10a, the extension of the electric field lines is small. Primarily small analytes 19 are located in the sensed region with strong electric fields and are thus preferentially detected.

In the alternative configuration shown in Fig. 10b, the extension of the field lines is large. Small and large analytes 19 and 20 are included in the region of strong electric fields and are detected at similar sensitivity. By performing the two measurements described and shown in Fig. 10a and 10b, it is possible to distinguish the contributions of small and large molecules or particles to the overall sensor signal.

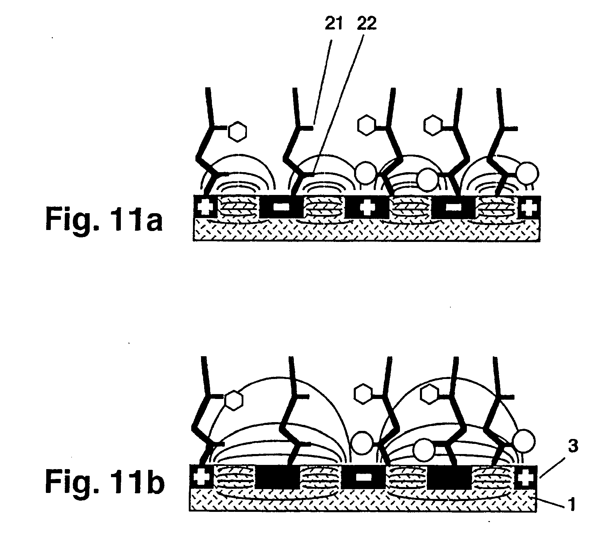

Figs. 11a and 11b illustrate a further exemplary application for changing the extension of the electric field lines by switching the electrical connection of the electrodes. In this embodiment, analytes are recognized by binding to specific receptors. Receptors 21 and 22 for different analytes are located in different distances to the surface of the sensor device consisting of electrodes 3 on a substrate 1. The sensed region of the capacitor depends on the electrical connection of the electrodes 3. In the normal configuration shown in Fig. 11a, only the analyte which binds to the receptors 22 closer to the surface are sensed. In the alternative connection shown in Fig. 11b, also the analytes bound to the more distant receptors 21 are measured.

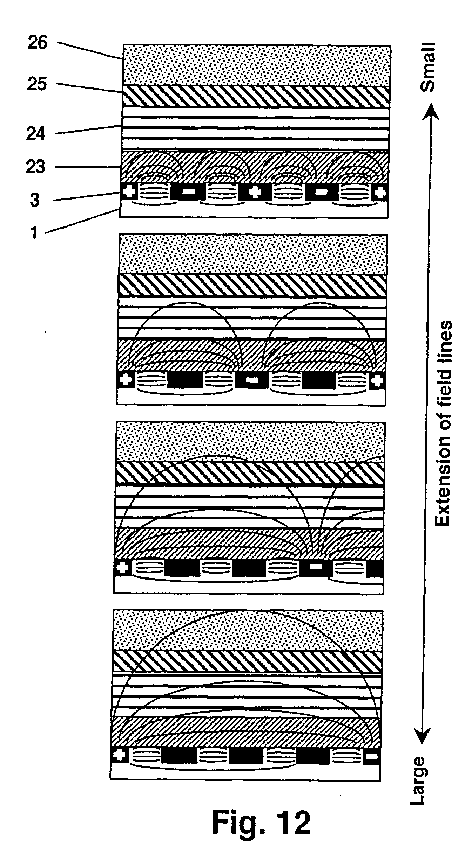

Fig. 12 finally depicts a still further exemplary application of the invented principle. Different sensor layers 23 to 26 (reference numerals are shown on the top structure only) are placed on an electrode/substrate base 3 and 1. Each sensor layer 23 to 26 can be analyzed - "addressed" - with a suitably extending electric field.

Starting from the uppermost electrode configuration downwards to the one at the bottom, the extension of the electric field lines increases so that more and more layers 23-26 come into the sensitive region of the sensor. A kind of depth profile of the different layers can be generated by systematically varying the electrode configuration. The signals produced by the layers located closer to the surface are always included in the signal upon the next electrical field extension step.

### Detailed Description of an Exemplary Embodiment

To realize the invention, the production in a standard semiconductor technology, such as a 0.8- mu m double poly-double metal-CMOS process, is proposed. This allows the integration of electronic switches implementing the different electric connections of the electrodes as well as the integration of read-out circuitry next to the sensor capacitor(s). If a sensor array is desirable, multiplexers can also be integrated.

This implementation is not limited in its dimensions. The electrode structure can also be implemented in much smaller dimensions, leading to correspondingly higher capacitances and sensitivities per capacitor area. On the other side, the capacitors could also be implemented in considerably larger dimensions if the response time of the device is of lesser concern.

Concerning the geometry of the electrodes, arbitrary shapes are possible, one of which is shown in Fig. 9, but these are not claimed.

Using interdigitated electrodes, a cross-section as shown in Figs. 3a and 3b is suggested. Possible dimensions are an electrode width and a spacing of 1.6 mu m with a total sensor size of 800 mu m x 800 mu m. The two connection configurations and the corresponding electric field lines are indicated in Figs. 3a or 3b, respectively.

In the alternative connection of Fig. 3b, the electrode spacing is larger and, hence, the capacitance has a tendency to smaller values. Whereas one electrode is only made of metal A of the CMOS process, cf. Fig. 4a, both electrodes are formed of a stack of metals A and B in the configuration of Fig. 4b, which can be interpreted as top view of the design shown in Figs. 3a and 3b. The electrode stacking may compensate for the increased electrode distance.

Other designs are possible, one of which is shown in Figs. 8a and 8b. There, the effective layer thickness is varied by the effective position of the electrodes and not by their periodicity or spacing.

A switching arrangement to connect various the sets of electrodes to the read-out circuitry are depicted in Figs 5a to 5c in different positions. The unused electrodes, cf. Fig. 3b, can be left floating or connected to a fixed potential, such as ground.

An exemplary measurement in the gas phase with a prototype designed as described above confirms that the principle works. In Fig. 6, the sensor signals of an interdigitated capacitor, coated with a layer of the polymer poly-(etherurethane) (PEUT) (epsilon = 4.8), upon exposure to concentration steps of n-octane (epsilon = 1.95) and water (epsilon APPROX 80) vapors in air are displayed as a function of the measurement time. The negative frequency shifts correspond to a capacitance increase, positive shifts indicate a decrease. In the normal configuration (dotted line), equivalent to the switch position of Fig. 5a, the polymer layer is effectively thick, and the responses are positive or negative, depending on the dielectric coefficients of the analyte and the sensitive layer. Using the alternative configuration (solid line), equivalent to the switch position of Fig. 5b, the layer is effectively thin which is reflected in capacitance increases for both analytes. The capacitance increase is due to the cooperative effects of swelling and replacing sorptive layer/analyte for air (low dielectric coefficient) within the field lines.

To perform an advanced differential measurement, the electrode configurations can be adapted so that undesired parameters, such as sensor drift or (especially for gas sensors) humidity influence, are cancelled out. This can be achieved, e.g. by varying the sensor size by connecting only a certain fraction or part of the sensor to the read-out circuitry. Fig. 7 shows a possible way to realize different capacitor sizes and to tune the effective sensor size this way.

For the read-out circuitry, a delta-sigma modulator, similar to that described by S. Kawahito, A. Koll, C. Hagleitner, H. Baltes, and Y. Tadokoro, "Delta-Sigma Modulation Sensor Interface Circuits with Improved Conversion Gain for Capacitive Readout Chemical Sensors", Trans IEE of Japan 119-E 3 (1999), 138 -142, is suitable owing to its high resolution. It can be modified to read out two (or more) electrode configurations quasi simultaneously, one of which being used as sensor and the other as reference capacitor.

If a temperature control of the sensor is desired, the capacitor will favorably be placed on a micromachined membrane with integrated temperature sensor and heater. Circuitry to accurately control the temperature can then be integrated on the CMOS chip as well.

To reduce signal degradation and the number of pins of the chip, a digital communication interface can be realized, as will be understood by a person skilled in the art.

### Further Applications

Many other applications are conceivable, a few of which are outlined in the following.

Electrode arrangements with different electrical connections can also serve to generate sensor capacitors with different electrical field line structure. Field lines with, e.g., different extensions above the surface of the device allow the discrimination of entities in different distances to the device surface.

A possible application is the recognition of analytes of different sizes, as shown in Figs. 10a and 10b. Depending on the dimensions of the electrode structures, analytes my be chemical molecules, macromolecules, proteins, cells, or macroscopic particles, etc. Whereas small analytes are distributed homogeneously everywhere, the effective concentration of large analytes is lower near the surface of the sensor device. Since the molecules or clusters of the analyte cannot penetrate the device, their centers are kept at a minimum distance determined by their radius. Therefore, the sensor capacitance is mainly influenced by the small-size analytes if operated in normal configuration, i.e. with small the extension of the field lines. In the alternative configuration shown in Fig. 10b, the extension of the field lines is large and small and large analytes are sensed to similar extent.

Another possibility using structures with different receptors at different distances from the surface is shown in Figs. 11a and 11b. The "close" receptors 22 near the surface can preferably react with one species, and receptors 21 at larger distance might react with another analyte species. These species may be or may include chemical molecules, macromolecules, proteins, cells, or macroscopic particles in the gas, liquid or solid phase. The sensed area of the capacitor can be varied by applying different electrode configurations as shown in Figs. 11a and 11b.

Another exemplary application is based on the accumulation of the analytes in different distances to the sensor device surface. This can be done by a stack of sensitive layers 23 to 26 as shown in Fig. 12 in various situations. Each of the various layers 23 to 26 accumulates a given analyte to a different extent.

Varying the extension of the electric field lines can also be used to analyze different layers on or regions above an electrode structure, as shown in Fig. 12. To give a macroscopic example with a relatively large time scale, the constitution of a snow cover, consisting of layers of snow of different densities, can be monitored in a remote area over a full winter season.

## Claims

1. A capacitive sensor with a plurality of electrodes, comprising
an electrically configurable electrode arrangement with more than two electrically separated electrode groups (5, 7), each group consisting of one or more electrodes (3), adapted, depending on the electrical configuration, to generate different electrical fields,
wherein the electrodes (3) of the different electrode groups (5, 7) are interdigitated,
wherein a cover layer of a sensitive material affected by changes in its dielectric properties upon exposure to an analyte to be measured covers the electrode arrangement in form of a coating,
wherein the electrode arrangement is configurable by varying electrical connections of the different electrode groups (5, 7) to read-out circuitry thereby modifying the distribution of electric field lines,
wherein the electrode arrangement is switchable to at least two different electrical configurations resulting in at least two different distributions of the generated electrical field, wherein the cover layer is exposed to such different distributions of electric fields.

2. The capacitive sensor according to claim 1, wherein each electrode group (5, 7) is connectable to associated circuitry for generating a desired electrical field.

3. The capacitive sensor according to any preceding claim, wherein three electrode groups (5, 7) are provided.

4. The capacitive sensor according to claim 1, wherein in at least one of the configurations one electrode group (5, 7) remains unconnected or floating.

5. The capacitive sensor according to any of the claims 1 to 4, wherein in at least one of the configurations one electrode group (5, 7) is grounded.

6. The capacitive sensor according to claim 1, further including one or more switches to alternate between different electrical configurations, and wherein circuitry is provided, connected to the switches, adapted to address and to switch between different electrical configurations.

7. The capacitive sensor according to any of the preceding claims, wherein the electrodes (3) or groups of electrodes (5, 7) are located on a heatable area, preferably on a micromachined membrane with an integrated heater.

8. The capacitive sensor according to claim 7, further including a temperature sensor for measuring the temperature of the electrode arrangement.

9. The capacitive sensor according to any of the preceding claims, wherein the cover layer is a polymer layer.

10. Use of the capacitive sensor according to any of the preceding claims as capacitive-type chemical or humidity sensor.

11. A sensor system, comprising a capacitive sensor according to one or more of the claims 1 to 9,
signal conditioning means for driving at least one of the electrodes (3) or groups of electrodes (5, 7) to generate a desired distribution of the electrical field, and
read-out means for receiving and/or evaluating signals of said sensor.

12. The sensor system according to claim 11, wherein the read-out means is or comprises a delta-sigma modulator.

13. The sensor system according to claim 11, wherein the read-out means allows for a differential measurement between different electrode configurations.

14. Method for operating a capacitive sensor with a plurality of electrodes,
the capacitive sensor comprising more than two electrically separated electrode groups (5, 7), each group (5, 7) consisting of one or more electrodes (3), the electrode groups (5, 7) forming an electrically configurable electrode arrangement, wherein the electrodes (3) of the different electrode groups (5, 7) are interdigitated, and wherein a cover layer of a sensitive material affected by changes in its dielectric properties upon exposure to an analyte to be measured covers the electrode arrangement in form of a coating, the method comprising
configuring the electrode arrangement by varying electrical connections of the different electrode groups (5, 7) to read-out circuitry thereby modifying the distribution of electric field lines such that depending on the electrical configuration different electrical fields are generated, and
switching the electrode arrangement to at least two different electrical configurations resulting in at least two different distributions of the generated electrical field, wherein the cover layer is exposed to such different distributions of electric fields.

15. Method of claim 14, wherein a differential measurement is performed between different electrode configurations.

## Patentansprüche

1. Ein kapazitiver Sensor mit einer Vielzahl von Elektroden, umfassend
eine elektrisch konfigurierbare Elektrodenanordnung mit mehr als zwei elektrisch getrennten Elektrodengruppen (5, 7), wobei jede Gruppe aus einer oder mehreren Elektroden besteht, derart ausgestaltet, dass sie unterschiedliche elektrische Felder in Abhängigkeit von der elektrischen Konfiguration erzeugt,
wobei die Elektroden (3) der unterschiedlichen Elektrodengruppen (5, 7) ineinander greifend sind,
wobei eine Abdeckschicht aus einem empfindlichen Material, das von Änderungen in seinen dielektrischen Eigenschaften in Gegenwart eines zu messenden Analyten beeinflusst wird, die Elektrodenanordnung in der Form einer Beschichtung abdeckt,
wobei die Elektrodenanordnung mittels Variieren elektrischer Verbindungen der verschiedenen Elektrodengruppen (5, 7) zu einem Ausleseschaltkreis konfigurierbar ist, wodurch die Verteilung der elektrischen Feldlinien geändert wird,
wobei die Elektrodenanordnung zwischen mindestens zwei elektrischen Konfigurationen schaltbar ist, woraus mindestens zwei verschiedene Verteilungen des erzeugten elektrischen Feldes resultieren, wobei die Abdeckschicht solchen verschiedenen Verteilungen des elektrischen Feldes ausgesetzt ist.

2. Der kapazitive Sensor nach Anspruch 1, wobei jede Elektrodengruppe (5, 7) mit einem zugeordneten Schaltkreis verbindbar ist, um ein gewünschtes elektrische Feld zu erzeugen.

3. Der kapazitive Sensor nach einem der vorangehenden Ansprüche, wobei drei Elektrodengruppen (5, 7) bereitgestellt werden.

4. Der kapazitive Sensor nach Anspruch 1, wobei eine Elektrodengruppe (5, 7) in mindestens einer der Konfigurationen nicht angeschlossen oder schwebend bleibt.

5. Der kapazitive Sensor nach einem der Ansprüche 1 bis 4, wobei eine Elektrodengruppe (5, 7) in mindestens einer der Konfigurationen geerdet ist.

6. Der kapazitive Sensor nach Anspruch 1, weiter umfassend einen oder mehrere Schalter um zwischen verschiedenen elektrischen Konfigurationen zu wechseln, und wobei Schaltungen bereitgestellt werden, die mit den Schaltern verbunden sind, die zur Adressierung und zum Schalten zwischen zwei verschiedenen elektrischen Konfigurationen ausgestaltet sind.

7. Der kapazitive Sensor nach einem der vorangehenden Ansprüche, wobei die Elektroden (3) oder Gruppen von Elektroden (5, 7) auf einer beheizbaren Fläche angeordnet sind, vorzugsweise auf einer mikromechanischen Membran mit integrierter Heizung angeordnet sind.

8. Der kapazitive Sensor nach Anspruch 7, weiter umfassend einen Temperatursensor zur Messung der Temperatur der Elektrodenanordnung.

9. Der kapazitive Sensor nach einem der vorangehenden Ansprüche, wobei die Abdeckschicht eine Polymerschicht ist.

10. Verwendung eines kapazitiven Sensors nach einem der vorangehenden Ansprüche als kapazitiver chemischer Sensor oder Feuchtigkeitssensor.

11. Ein Sensorsystem, umfassend einen kapazitiven Sensor nach einem der Ansprüche 1 bis 9,
Mittel zur Signalaufbereitung zur Ansteuerung mindestens eines der Elektroden (3) oder der Elektrodengruppen (5, 7), um eine gewünschte Verteilung des elektrischen Feldes zu erzeugen, und
ein Auslesemittel zum Empfangen und/oder Auswerten von Signalen des Sensors.

12. Das Sensorsystem nach Anspruch 11, wobei das Auslesemittel ein Delta-Sigma-Modulator ist oder einen solchen umfasst.

13. Das Sensorsystem nach Anspruch 11, wobei das Auslesemittel eine differentielle Messung zwischen verschiedenen Elektrodenkonfigurationen erlaubt.

14. Verfahren zum Betrieb eines kapazitiven Sensors mit einer Mehrzahl von Elektroden,
wobei der kapazitive Sensor mehr als zwei elektrisch getrennte Elektrodengruppen (5, 7) umfasst, wobei jede Gruppe aus einer oder mehreren Elektroden (3) besteht, wobei die Elektrodengruppen (5, 7) eine elektrisch konfigurierbare Elektrodenanordnung bilden, wobei die Elektroden (3) der unterschiedlichen Elektrodengruppen (5, 7) ineinander greifend sind, und wobei eine Abdeckschicht aus einem empfindlichen Material, das von Änderungen in seinen dielektrischen Eigenschaften in Gegenwart eines zu messenden Analyten beeinflusst wird, die Elektrodenanordnung in der Form einer Beschichtung abdeckt, wobei das Verfahren umfasst:
Konfigurieren der Elektrodenanordnung mittels Variieren elektrischer Verbindungen der verschiedenen Elektrodengruppen (5, 7) zu einem Ausleseschaltkreis, wodurch die Verteilung der elektrischen Feldlinien geändert wird, so dass unterschiedliche elektrische Felder in Abhängigkeit von der elektrischen Konfiguration generiert werden, und
Schalten der Elektrodenanordnung zwischen mindestens zwei elektrischen Konfigurationen, woraus mindestens zwei verschiedene Verteilungen des erzeugten elektrischen Feldes resultieren, wobei die Abdeckschicht solchen verschiedenen Verteilungen des elektrischen Feldes ausgesetzt ist.

15. Verfahren nach Anspruch 14, wobei eine differentielle Messung zwischen verschiedenen Elektrodenkonfigurationen durchgeführt wird.

## Revendications

1. Un capteur capacitif avec une pluralité d'électrodes, comprenant
un arrangement d'électrodes électriquement configurable avec plus de deux groupes d'électrodes (5, 7) qui sont électriquement séparés, chaque groupe consistant d'une ou de plusieurs électrodes (3), adaptées à générer des différents champs électriques dépendant de la configuration électrique,
les électrodes (3) des différents groupes d'électrodes (5, 7) étant interdigitées,
une couche de couverture d'un matériau sensible, affecté par des changements de ses propriétés diélectriques quand la couche est exposée à un analyte à mesurer, couvrant l'arrangement d'électrodes en forme de revêtement,
l'arrangement d'électrodes étant configurable en variant des connexions électriques des différents groupes d'électrodes (5, 7) à un circuit à lire, modifiant par cela la distribution des lignes de champs électrique,
l'arrangement d'électrodes étant commutable entre au moins deux configurations électriques différentes, résultant en au moins deux différentes distributions du champs électrique généré, la couche de couverture étant exposée à des telles distributions des champs électriques.

2. Le capteur capacitif selon la revendication 1, chaque groupe d'électrodes (5, 7) étant connectable avec des circuits associés afin de générer un champs électrique désiré.

3. Le capteur capacitif selon l'une des revendications précédentes, trois groupes d'électrodes (5, 7) étant prévus.

4. Le capteur capacitif selon la revendication 1, au moins un groupe d'électrodes (5, 7) restant déconnecté ou flottant dans au moins une des configurations.

5. Le capteur capacitif selon l'une des revendications 1 à 4, au moins un groupe d'électrodes (5, 7) étant mis à la terre dans au moins une des configurations.

6. Le capteur capacitif selon la revendication 1, en outre incluant un ou plusieurs commutateurs afin d'alterner entre des différentes configurations électriques, et des circuits étant prévus, qui sont connectés avec les commutateurs, adaptés à adresser et commuter entre des différentes configurations électriques.

7. Le capteur capacitif selon l'une des revendications précédentes, les électrodes (3) ou des groupes d'électrodes (5, 7) étant situés sur une surface pouvant être chauffée, préférablement sur un membrane micro-usinée avec un chauffage intégré.

8. Le capteur capacitif selon la revendication 7, en outre incluant un capteur de température pour mesurer la température de l'arrangement d'électrodes.

9. Le capteur capacitif selon l'une des revendications précédentes, la couche de couverture étant une couche de polymère.

10. Utilisation du capteur capacitif selon l'une des revendications précédentes comme capteur chimique ou d'humidité de type capacitif.

11. Un système de capteur, comprenant un capteur capacitif selon l'une des revendications 1 à 9,
des moyens de conditionnement de signal pour commander au moins un des électrodes (3) ou des groupes d'électrodes (5, 7) afin de générer une distribution désirée du champs électrique, et
des moyens de lecture pour recevoir et/ou évaluer des signaux dudit capteur.

12. Le système de capteur selon la revendication 11, les moyens de lecture étant ou comprenant un modulateur delta-sigma.

13. Le système de capteur selon la revendication 11, les moyens de lecture permettant une mesure différentielle entre des différentes configurations d'électrodes.

14. Procédé d'opération d'un capteur capacitif avec une pluralité d'électrodes,
le capteur capacitif comprenant plus de deux groupes d'électrodes (5, 7) électriquement séparés, chaque groupe consistant d'une ou de plusieurs électrodes (3), les groupes d'électrodes (5, 7) formant un arrangement d'électrodes électriquement configurable, les électrodes (3) des différents groupes d'électrodes (5, 7) étant interdigitées, et une couche de couverture d'un matériau sensible, affecté par des changements dans ses propriétés diélectriques quand la couche est exposée à un analyte à mesurer, couvrant l'arrangement d'électrodes en forme de revêtement, le procédé comprenant
configurer l'arrangement d'électrodes en variant des connexions électriques des différents groupes d'électrodes (5, 7) à un circuit à lire, modifiant par cela la distribution des lignes de champs électriques de sorte que des différents champs électriques soient générés dépendant de la configuration électrique, et
commuter l'arrangement d'électrodes entre au moins deux configuration électriques, résultant en au moins deux différentes distributions du champs électrique généré, la couche de couverture étant exposée à des telles distributions des champs électriques.

15. Procédé selon la revendication 14, une mesure différentielle étant effectuée entre les différentes configurations d'électrodes.
